(19)

Europäisches
Patentamt
European
Patent Office
Office européen
des brevets

(11)  **EP 4 174 142 A1**

(12)  **EUROPEAN PATENT APPLICATION**
published in accordance with Art. 153(4) EPC

(43) Date of publication:
**03.05.2023  Bulletin 2023/18**

(21) Application number: **21834184.0**

(22) Date of filing: **23.06.2021**

(51) International Patent Classification (IPC):
**C09D 11/101** *(2014.01)*    **C09D 11/322** *(2014.01)*
**B41M 5/00** *(2006.01)*

(52) Cooperative Patent Classification (CPC):
**B41M 5/00; C09D 11/101; C09D 11/322**

(86) International application number:
**PCT/JP2021/023788**

(87) International publication number:
**WO 2022/004524 (06.01.2022 Gazette 2022/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **29.06.2020  JP 2020111579**

(71) Applicant: **Kyodo Printing Co., Ltd.
Tokyo 112-8501 (JP)**

(72) Inventors:
 • **KARINO, Masahiro
  Tokyo 112-8501 (JP)**
 • **KOBAYASHI, Fumihito
  Tokyo 112-8501 (JP)**
 • **TERADA, Akira
  Tokyo 112-8501 (JP)**

(74) Representative: **Wallinger Ricker Schlotter
Tostmann
Patent- und Rechtsanwälte mbB
Zweibrückenstraße 5-7
80331 München (DE)**

(54)  **INFRARED RAY-ABSORBING ULTRAVIOLET-RAY CURABLE INK AND INFRARED RAY-ABSORBING PRINTED MATTER**

(57)  Provided are: an infrared ray-absorbing ultraviolet-ray curable ink which has infrared ray-absorbing ability and from which it is possible to provide printed matter having excellent resistance to bases, particularly resistance to washing; and an infrared ray-absorbing printed matter. According to the present invention, an ink composition is obtained by using an ultraviolet-ray curable urethane acrylate resin together with a tungsten-based infrared ray-absorbing pigment. More specifically, this infrared ray-absorbing ultraviolet-ray curable ink contains a tungsten-based infrared ray-absorbing pigment, an ultraviolet-ray curable urethane acrylate resin, and an ultraviolet-ray curable acrylic resin not including a urethane bond.

EP 4 174 142 A1

**Description**

FIELD

The present invention relates to an infrared-absorbing ultraviolet-curable ink and an infrared-absorbing printed article. Specifically, the present invention relates to an infrared-absorbing ultraviolet-curable ink comprising a tungsten-based infrared-absorbing pigment, and a method for the production thereof.

BACKGROUND

Infrared-absorbing ink, which is a type of functional ink, is used for various purposes, and for example, infrared-absorbing ink is printed on a part of securities to prevent counterfeiting.

Examples of pigments exhibiting an infrared-absorption function to be blended into an infrared-absorbing ink include cesium tungsten oxide (CWO), antimony-doped tin oxide (ATO), indium tin oxide (ITO), and carbon black. The demand for infrared-absorbing ink in which, in particular, cesium tungsten oxide (CWO) is used is increasing due to the high infrared-absorbing function and high transparency thereof.

As an infrared-absorbing ink in which cesium tungsten oxide (CWO) is used, for example, an ink comprising infrared-absorbing material fine particles selected from composite tungsten oxide (CWO) or tungsten oxide having a Magneli phase, and a vehicle has been described (refer to Patent Literature 1).

An anti-counterfeiting ink composition using ultrafine particles of a composite tungsten oxide (CWO) having an XRD peak-to-top intensity ratio within a specified range has been proposed (refer to Patent Literature 2).

However, the infrared-absorbing inks described in Patent Literature 1 and 2 are inactivated by the influence of basic substances such as detergents, and the infrared-absorbing function cannot be maintained in some cases.

An infrared-absorbing ultraviolet-curable ink having resistance to basic substances such as detergents (washing resistance) by mixing a predetermined amount of a solvent, a solvent-soluble acrylic resin, a CWO dispersion, and an ultraviolet-curable resin has been proposed (refer to Patent Literature 3).

[CITATION LIST]

[PATENT LITERATURE]

[PTL 1] WO 2016/121801
[PTL 2] WO 2017/104855
[PTL 3] Japanese Unexamined Patent Publication (Kokai) No. 2020-050690

SUMMARY

[TECHNICAL PROBLEM]

Though the ink described in Patent Literature 3 has a certain degree of washing resistance, in some cases, even higher washing resistance is required, depending on the application.

The present invention has been conceived in light of the circumstances described above, and an object thereof is to provide an infrared-absorbing ultraviolet-curable ink which can impart a printed article having infrared absorption properties and excellent resistance to bases, in particular washing resistance, and an infrared-absorbing printed article.

[SOLUTION TO PROBLEM]

The present inventors performed rigorous investigation in order to achieve the object described above, and have discovered that when an ink composition using an ultraviolet-curable urethane acrylate resin is used together with a tungsten-based infrared-absorbing pigment, a printed article having infrared absorption properties and excellent resistance to bases due to ultraviolet-curing can be obtained, and have completed the present invention. Specifically, the present invention is as described below.

«Aspect 1»

An infrared-absorbing ultraviolet-curable ink, comprising a tungsten-based infrared-absorbing pigment, an ultraviolet-curable urethane acrylate resin, and an ultraviolet-curable acrylic resin having no urethane bond.

«Aspect 2»

The infrared-absorbing ultraviolet-curable ink according to Aspect 1, comprising 1 to 150 parts by mass of the ultraviolet-curable urethane acrylate resin relative to 100 parts by mass of the ultraviolet-curable acrylic resin.

«Aspect 3»

The infrared-absorbing ultraviolet-curable ink according to Aspect 1 or 2, comprising 20 parts by mass or less of the tungsten-based infrared-absorbing pigment relative to 100 parts by mass of total solids of the infrared-absorbing ultraviolet-curable ink.

«Aspect 4»

The infrared-absorbing ultraviolet-curable ink according to any one of Aspects 1 to 3, comprising 1 to 50 parts by mass of the ultraviolet-curable urethane acrylate resin relative to 100 parts by mass of total solids of the infrared-absorbing ultraviolet-curable ink.

«Aspect 5»

The infrared-absorbing ultraviolet-curable ink according to any one of Aspects 1 to 4, wherein the ultraviolet-curable urethane acrylate resin has a plurality of acryloyl groups.

«Aspect 6»

The infrared-absorbing ultraviolet-curable ink according to any one of Aspects 1 to 5, wherein the tungsten-based infrared-absorbing pigment is at least one selected from:

a composite tungsten oxide represented by:

general formula (1):        $M_xW_yO_z$

where M is one or more elements selected from the group consisting of H, He, alkali metal elements, alkaline earth metal elements, rare earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi, and I, W is tungsten, O is oxygen, and x, y, and x are each a positive number, $0 < x/y \leq 1$, and $2.2 \leq z/y \leq 3.0$, or
a tungsten oxide having a Magneli phase represented by:

general formula (2):        $W_yO_z$

where W is tungsten, O is oxygen, y and z are each a positive number, and $2.45 \leq z/y \leq 2.999$).

<<Aspect 7>>

The infrared-absorbing ultraviolet-curable ink according to any one of Aspects 1 to 6, which is an inkjet ink.

«Aspect 8»

An infrared-absorbing printed article, comprising a printed part which is printed with the infrared-absorbing ultraviolet-curable ink according to any one of Aspects 1 to 7.

[ADVANTAGEOUS EFFECTS OF INVENTION]

The infrared-absorbing ultraviolet-curable ink of the present invention is an ink which can impart printed articles with infrared absorption properties and excellent resistance to bases, in particular, washing resistance. Thus, even if a printed article is washed together with clothes, the infrared-absorption function thereof can be maintained due to its resistance to bases.

DESCRIPTION OF EMBODIMENTS

The infrared-absorbing ultraviolet-curable ink of the present invention comprises a tungsten-based infrared-absorbing pigment, an ultraviolet-curable urethane acrylate resin, and an ultraviolet-curable acrylic resin having no urethane bond.

In the present invention, the phrase "ultraviolet-curable resin" means a material which is cured through polymerization or cross-linking by the energy of ultraviolet emitted from an ultraviolet irradiation device with a photoinitiator, and may be in the form of a monomer, oligomer, or prepolymer.

By including a tungsten-based infrared-absorbing pigment in the infrared-absorbing ultraviolet-curable ink of the present invention, a printed article having infrared absorption performance can be provided. By including an ultraviolet-curable urethane acrylate resin, a printed article which has ultraviolet-curing performance and which is excellent in resistance to bases, in particular, washing resistance, can be realized.

Even if a tungsten-based infrared-absorbing pigment, which imparts infrared absorption performance, are dispersed in a conventional ink composed primarily of an ultraviolet-curable acrylic resin having no urethane bond, the pigment will settle in the ink, or the pigment-containing dispersion will separate from the ultraviolet-curable ink, resulting in difficulty with the use thereof as a printing ink.

The viscosity of the ultraviolet-curable acrylate resin, which imparts washing resistance and which is an indispensable component of the present invention, is high. Thus, a composition containing the ultraviolet-curable urethane acrylate resin as a component cannot be used as-is as an inkjet ink.

In connection thereto, the present inventors have discovered that by using an ultraviolet-curable acrylic resin having a low viscosity and a high compatibility with the ultraviolet-curable urethane acrylate resin, a tungsten-based infrared-absorbing pigment can suitably be dispersed, and the viscosity attributable to the ultraviolet-curable urethane acrylate resin can be reduced, whereby a practical ink can be obtained.

Though not to be limited by theory, it is believed that the effects as described above are brought about because the ink of the present invention contains the ultraviolet-curable urethane acrylate resin, whereby hydrogen bonds are formed by urethane bonds, and as a result, the tungsten-based infrared-absorbing pigment is coated with the ultraviolet-curable urethane acrylate resin, which improves dispersibility and resistance to bases, in particular, washing resistance, and because the ultraviolet-curable acrylic resin which is highly compatible with the ultraviolet-curable urethane acrylate resin is contained therein, whereby the formation of hydrogen bonds between ultraviolet-curable urethane acrylate resins is inhibited, which reduces the viscosity of the ink.

The viscosity of the infrared-absorbing ultraviolet-curable ink of the present invention, at an ambient temperature of approximately 25 °C, may be 300 mPa·s or less, 150 mPa·s or less, 80 mPa.s or less, or 60 mPa.s or less, and may be 10 mPa.s or more, or 15 mPa.s or more.

When the infrared-absorbing ultraviolet-curable ink of the present invention is used as an inkjet ink, the viscosity of the ink is preferably 60 mPa·s or less, may be 40 mPa·s or less or 30 mPa·s or less, and is particularly preferably 20 mPa·s.

<Tungsten-Based Infrared-Absorbing Pigment>

The infrared-absorbing ultraviolet-curable ink of the present invention has a tungsten-based infrared-absorbing pigment dispersed therein as an indispensable component. By including the tungsten-based infrared-absorbing pigment in the infrared-absorbing ultraviolet-curable ink of the present invention, a printed article having infrared absorption performance can be provided.

The tungsten-based infrared-absorbing pigment used in the present invention is not particularly limited, and any well-known pigment used in the field of inks can be adopted.

The tungsten-based infrared-absorbing pigment may be, for example, one or more infrared-absorbing pigments selected from a composite tungsten oxide represented by general formula (1): $M_xW_yO_z$ where M is one or more elements selected from the group consisting of H, He, alkali metal elements, alkaline earth metal elements, rare earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi, and I, W is tungsten, O is oxygen, and x, y, and x are each a positive number, $0 < x/y \leq 1$, and $2.2 \leq z/y \leq 3.0$, or a tungsten oxide having a Magneli phase represented by general formula (2): $W_yO_z$ where W is tungsten, O is oxygen, y and z are each a positive number, and $2.45 \leq z/y \leq 2.999$).

Such a tungsten-based infrared-absorbing pigment can be produced by the method for the production of a composite tungsten oxide or a tungsten oxide having a Magneli phase described in, for example, Japanese Unexamined Patent Publication (Kokai) No. 2005-187323.

Element M is contained in the composite tungsten oxide represented by general formula (1). Thus, even in the case of $z/y = 3.0$ in general formula (1), free electrons are generated, and absorption characteristics derived from the free electrons appear in the near-infrared light wavelength region, resulting in an effective a material which absorbs near-infrared having a wavelength of approximately 1000 nm.

In particular, from the viewpoint of improving the optical properties and weather resistance as a near-infrared absorbing material, one or more selected from the group consisting of Cs, Rb, K, Tl, In, Ba, Li, Ca, Sr, Fe, and Sn can be adopted as the element M.

The composite tungsten oxide represented by general formula (1) may be treated with a silane coupling agent. By treating with a silane coupling agent, near-infrared absorption properties and transparency in the visible light wavelength region can be improved.

When the value of x/y, which indicates the amount of element M added, is greater than 0, a sufficient amount of free electrons is generated, whereby the near-infrared absorption effect can be fully exhibited. As the amount of element M added increases, the supply amount of free electrons increases and the near-infrared absorption effect increases, though the effect usually saturates at x/y of approximately 1. When the value of x/y is 1 or less, the formation of an impurity phase in the pigment-containing layer can be prevented.

The value of x/y may be 0.001 or more, 0.2 or more, or 0.30 or more, and may be 0.85 or less, 0.5 or less, or 0.35 or less. The value of x/y can be, in particular, 0.33.

In general formulas (1) and (2), the value of z/y indicates the level of oxygen content control. In the composite tungsten oxide represented by general formula (1), when the value of z/y satisfies the relationship $2.2 \leq z/y \leq 3.0$, in addition to the same oxygen control mechanism as the tungsten oxide represented by general formula (2), there is a supply of free electrons due to the addition of element M even when z/y = 3.0. In general formula (1), the value of z/y may satisfy the relationship $2.45 \leq z/y \leq 3.0$.

The composite tungsten oxide represented by general formula (1) preferably comprises a hexagonal crystal structure or consists of a hexagonal crystal structure. When the composite tungsten oxide represented by general formula (1) has a hexagonal crystal structure, the pigment has high transmission in the visible light wavelength region and high absorption in the near-infrared light wavelength region. The cations of element M are arranged and present in the hexagonal voids.

In general, hexagonal crystals are formed when an element M having a large ionic radius is added. Specifically, when an element having a large ionic radius such as Cs, K, Rb, Tl, In, Ba, Sn, Li, Ca, Sr, or Fe is added, hexagonal crystals are easily formed. However, the element M in the composite tungsten oxide represented by general formula (1) is not limited to these elements as long as the added element M is present in the hexagonal voids formed by the $WO_6$ units.

When the composite tungsten oxide having a hexagonal crystal structure represented by general formula (1) has a uniform crystal structure, the addition amount of the added element M can be 0.2 or more and 0.5 or less, can be 0.30 or more and 0.35 or less, and in particular, can be 0.33. It is believed that by setting the value of x/y to 0.33, the added element M is arranged in substantially all of the hexagonal voids.

A tungsten bronze having tetragonal crystals or cubic crystals other than hexagonal crystals may also be used. In the composite tungsten oxide represented by general formula (1), depending on the crystal structure, the absorption position in the near-infrared light wavelength region tends to change, and the absorption position tends to move toward the longer wavelength side in the order of cubic, tetragonal, and hexagonal. Thus, hexagonal tungsten bronze may be used for applications in which more light in the visible light wavelength region is transmitted and more light in the near-infrared light wavelength region is desired to be absorbed.

In the tungsten oxide having a Magneli phase represented by general formula (2), the so-called "Magneli phase", which has a composition ratio in which the value of z/y value satisfies the relationship $2.45 \leq z/y \leq 2.999$, imparts the resulting pigment with high stability and high absorption characteristics in the near-infrared wavelength region.

Since the composite tungsten oxide represented by general formula (1) and the tungsten oxide having a Magneli phase represented by general formula (2) absorb a large amount of light in the near-infrared wavelength region, particularly light near the 1000 nm wavelength, the color tone thereof often changes from bluish to greenish.

The dispersed particle size of the tungsten-based infrared-absorbing pigment used in the infrared-absorbing ultraviolet-curable ink of the present invention is not particularly limited, and can be appropriately selected depending on the intended use of the ink to be formed.

When it is desired to form an ink having transparency, it is preferable to use a tungsten-based infrared-absorbing pigment having a dispersed particle size of 2000 nm or less as a volume average. When the dispersed particle size is 2000 nm or less, the difference between the peak of the transmittance (reflectance) in the visible light wavelength region and the bottom of the absorption in the near-infrared light wavelength region increases, whereby a near-infrared absorbing pigment having transparency in the visible light wavelength region is achieved. Since particles having a dispersed particle size smaller than 2000 nm do not completely block light due to scattering, the transparency can be efficiently maintained while maintaining the visibility in the visible light wavelength region.

When emphasizing transparency in the visible light wavelength region, it is preferable to consider scattering due to particles. Specifically, the volume average dispersed particle size of the tungsten-based infrared-absorbing pigment is preferably 200 nm or less, and may be 100 nm or less, 50 nm or less, or 30 nm or less.

When the dispersed particle size of the tungsten-based infrared-absorbing pigment is 200 nm or less, the geometric scattering or Mie scattering is reduced, resulting in a Rayleigh scattering region. In the Rayleigh scattering region, the scattered light is reduced in inverse proportion to the sixth power of the diameter of the dispersed particles. Thus, as the diameter of the dispersed particles is reduced, the scattering is reduced and the transparency is improved. When the dispersed particle size of the tungsten-based infrared-absorbing pigment is 100 nm or less, the scattered light is greatly reduced. Thus, from the viewpoint of avoiding light scattering, a smaller dispersed particle size is preferable.

Conversely, when the dispersed particle size of the tungsten-based infrared-absorbing pigment is 1 nm or more, 3 nm or more, 5 nm or more, or 10 nm or more, industrial production tends to be easy.

The volume average dispersed particle size of the tungsten-based infrared-absorbing pigment can be measured using a dynamic light scattering Microtrac particle size distribution meter (manufactured by Nikkiso Co., Ltd.), which irradiates the fine particles exhibiting Brownian motion with laser light to determine the particle size from the light scattering information obtained therefrom.

In the infrared-absorbing ultraviolet-curable ink of the present invention, though the content of the tungsten-based infrared-absorbing pigment is not particularly limited, it is preferable to contain 20 parts by mass or less of the tungsten-based infrared-absorbing pigment relative to 100 parts by mass of the total solids of the infrared-absorbing ultraviolet-curable ink.

The content of the tungsten-based infrared-absorbing pigment of the infrared-absorbing ultraviolet-curable ink of the present invention may be, relative to 100 parts by mass of the total solids of the infrared-absorbing ultraviolet-curable ink, 18 parts by mass or less, 16 parts by mass or less, 14 parts by mass, 12 parts by mass or less, 10 parts by mass or less, 8 parts by mass or less, 5 parts by mass or less, or 3 parts by mass or less.

The content of the tungsten-based infrared-absorbing pigment of the infrared-absorbing ultraviolet-curable ink of the present invention may be, relative to 100 parts by mass of the total solids of the infrared-absorbing ultraviolet-curable ink, 0.1 parts by mass or more, 0.5 parts by mass or more, 1.0 parts by mass or more, 1.5 parts by mass or more, or 2.0 parts by mass or more.

<Ultraviolet-Curable Urethane Acrylate Resin>

The infrared-absorbing ultraviolet-curable ink of the present invention comprises an ultraviolet-curable urethane acrylate resin as an essential component. By including the ultraviolet-curable urethane acrylate resin, a printed article having ultraviolet-curing performance and excellent resistance to bases, in particular washing resistance, can be provided.

The ultraviolet-curable urethane acrylate resin used in the present invention is not particularly limited as long as the ultraviolet-curable urethane acrylate resin is a polymer having a urethane bond and an acryloyl group derived from acrylic acid.

Ultraviolet-curable urethane acrylate resin has an acryloyl group in its molecular chain, and thus can be cured by ultraviolet. The presence of urethane bonds in the molecular chain enables the formation of hydrogen bonds with other molecules. As a result, a printed article having excellent resistance to bases, and in particular washing resistance, can be provided.

The acryloyl group of the ultraviolet-curable urethane acrylate resin is a group derived from acrylic acid. The acrylic acid may be monofunctional or polyfunctional.

The ultraviolet-curable urethane acrylate resin used in the present invention preferably has a plurality of acryloyl groups. The number of acryloyl groups of the ultraviolet-curable urethane acrylate resin may be 2 or more, 3 or more, 4 or more, 6 or more, or 9 or more.

When the number of acryloyl groups is 3 or more, crosslinks can be formed between molecules, whereby resistance to bases, and in particular washing resistance, can be further improved.

In addition, the urethane bond of the ultraviolet-curable urethane acrylate resin is formed by reacting an isocyanate group and a hydroxy group. The urethane bond of the ultraviolet-curable urethane acrylate resin used in the present invention may be formed from either an aromatic isocyanate compound or an aliphatic isocyanate compound.

The compound having a hydroxyl group for forming the urethane bond of ultraviolet-curable urethane acrylate resin may be either polyether-based or polyester-based, may be a polymer, and may be a low molecular weight diol.

The ultraviolet-curable urethane acrylate resin used in the present invention may be a polymer, oligomer, or prepolymer having a certain molecular weight.

In the infrared-absorbing ultraviolet-curable ink of the present invention, though the content of the ultraviolet-curable urethane acrylate resin is not particularly limited, it is preferable that 1 to 50 parts by mass of the ultraviolet-curable urethane acrylate resin relative to the 100 parts by mass of the total solids of the infrared-absorbing ultraviolet-curable ink be contained.

When the ratio of the ultraviolet-curable urethane acrylate resin to 100 parts by mass of the total solids of the infrared-absorbing ultraviolet-curable ink is within the above range, the infrared-absorbing ultraviolet-curable ink of the present invention can be used to provide a printed article having sufficient ultraviolet-curing performance and sufficient resistance to bases, and in particular, excellent washing resistance.

The content of the ultraviolet-curable urethane acrylate resin in the infrared-absorbing ultraviolet-curable ink of the present invention may be, relative to 100 parts by mass of the total solids of the infrared-absorbing ultraviolet-curable ink, 2 parts by mass or more, 3 parts by mass or more, 5 parts by mass or more, 10 parts by mass or more, 15 parts by mass or more, 20 parts by mass or more, or 25 parts by mass or more.

The content of the ultraviolet-curable urethane acrylate resin in the infrared-absorbing ultraviolet-curable ink of the present invention may be, relative to 100 parts by mass of the total solids of the infrared-absorbing ultraviolet-curable ink, 45 parts by mass or less, 40 parts by mass or less, 35 parts by mass or less, 30 parts by mass or less, or 25 parts by mass or less.

In the infrared-absorbing ultraviolet-curable ink of the present invention, the ultraviolet-curable urethane acrylate resin is preferably 1 to 150 parts by mass relative to 100 parts by mass of the ultraviolet-curable acrylic resin, which is one of the indispensable components, as will be described later.

When the blending amount of the ultraviolet-curable urethane acrylate resin relative to 100 parts by mass of the ultraviolet-curable acrylic resin is within the above range, in the infrared-absorbing ultraviolet-curable ink of the present invention, an increase in viscosity caused by the ultraviolet-curable urethane acrylate resin can be suppressed.

The blending amount of the ultraviolet-curable urethane acrylate resin relative to 100 parts by mass of the ultraviolet-curable acrylic resin may be 2 parts by mass or more, 3 parts by mass or more, 5 parts by mass or more, 10 parts by mass or more, 20 parts by mass or more, 30 parts by mass or more, 40 parts by mass or more, or 50 parts by mass or more.

The blending amount of the ultraviolet-curable urethane acrylate resin relative to 100 parts by mass of the ultraviolet-curable acrylic resin may be 120 parts by mass or less, 100 parts by mass or less, 90 parts by mass or less, 80 parts by mass or less, 70 parts by mass or less, 60 parts by mass or less, or 50 parts by mass or less.

<Ultraviolet-Curable Acrylic Resin Having No Urethane Bond>

The infrared-absorbing ultraviolet-curable ink of the present invention comprises an ultraviolet-curable acrylic resin having no urethane bond as an indispensable component. The ultraviolet-curable acrylic resin having no urethane bond has the action of suitably dispersing the tungsten-based infrared-absorbing pigment and suppressing an increase in viscosity caused by the ultraviolet-curable urethane acrylate resin.

Thus, in the infrared-absorbing ultraviolet-curable ink of the present invention, the ultraviolet-curable acrylic resin having no urethane bond is a material having a low viscosity and a high compatibility with the ultraviolet-curable urethane acrylate resin.

The ultraviolet-curable acrylic resin having no urethane bond is required to have a low viscosity, and is thus preferably a monomer, an oligomer, or a prepolymer, and particularly preferably a monomer.

The monomer constituting the ultraviolet-curable acrylic resin having no urethane bond used in the present invention is not particularly limited, and an acrylic monomer which is conventionally used in ultraviolet-curable inks can be used.

Examples of such acrylic monomers include acrylates having ethylenically unsaturated bonds, and in the present invention, either a monofunctional acrylate or a polyfunctional acrylate may be used. These can be used together.

Examples of monofunctional acrylates include caprolactone acrylate, isodecyl acrylate, isooctyl acrylate, isomyristyl acrylate, isostearyl acrylate, 2-ethylhexyl-diglycol diacrylate, 2-hydroxybutyl acrylate, 2-acryloyloxyethylhexahydrophthalate, neopentyl glycol acrylate benzoate, isoamyl acrylate, lauryl acrylate, stearyl acrylate, butoxyethyl acrylate, ethoxy-diethylene glycol acrylate, methoxy-triethylene glycol acrylate, methoxy-polyethylene glycol acrylate, methoxydipropylene glycol acrylate, phenoxyethyl acrylate, phenoxy-polyethylene glycol acrylate, nonylphenol ethylene oxide adduct acrylate, tetrahydrofurfuryl acrylate, isobornyl acrylate, 2-hydroxyethyl acrylate, 2-hydroxypropyl acrylate, 2-hydroxy-3-phenoxypropyl acrylate, 2-acryloyloxyethyl-succinic acid, 2-acryloyloxyethyl-phthalic acid, and 2-acryloyloxyethyl-2-hydroxyethyl-phthalic acid.

Examples of bifunctional acrylates include hydroxypivalic acid neopentyl glycol diacrylate, alkoxylated hexanediol diacrylate, polytetramethylene glycol diacrylate, trimethylolpropane acrylic acid benzoate, diethylene glycol diacrylate, triethylene glycol diacrylate, tetraethylene glycol diacrylate, polyethylene glycol (200) diacrylate, polyethylene glycol (400) diacrylate, polyethylene glycol (600) diacrylate, neopentyl glycol diacrylate, 1,3-butylene glycol diacrylate, 1,4-butanediol diacrylate, 1,6-hexanediol diacrylate, 1,9-nonanediol diacrylate, dimethyloltricyclodecane diacrylate, and bisphenol A diacrylate.

Examples of trifunctional or higher functional acrylates include ethoxylated isocyanuric acid triacrylate, ε-caprolactone-modified tris-(2-acryloxyethyl) isocyanurate, pentaerythritol triacrylate, trimethylolpropane triacrylate, ditrimethylolpropane tetraacrylate, pentaerythritol tetraacrylate, dipentaerythritol polyacrylate, ethoxylated pentaerythritol tetraacrylate, and dipentaerythritol hexaacrylate.

Examples of acrylic oligomers include polyester acrylate, epoxy acrylate, silicon acrylate, and polybutadiene acrylate.

<Other Components>

The infrared-absorbing ultraviolet-curable ink of the present invention may comprise other arbitrary components other than the tungsten-based infrared-absorbing pigment, ultraviolet-curable urethane acrylate resin, and ultraviolet-curable acrylic resin having no urethane bond serving as indispensable components.

The other components are not particularly limited, and known substances which are used in the field of ultraviolet-curable inks can be used. Examples thereof include a photoinitiator, solvent for dilution, dispersant, coupling agent, viscosity modifier, surface tension modifier, and pH modifier.

(Photoinitiator)

Photoinitiators are compounds which generate radicals such as active oxygen when irradiated with ultraviolet. When a photoinitiator is used in the infrared-absorbing ultraviolet-curable ink of the present invention, the type thereof is not particularly limited as long as the ultraviolet-curable urethane acrylate resin and ultraviolet-curable acrylic resin having no urethane bond, which are indispensable components, can be photopolymerized therewith, and the photoinitiator can be appropriately selected from photoinitiators conventionally used in ultraviolet-curable inks.

Examples of photoinitiators include acetophenones such as acetophenone, $\alpha$-aminoacetophenone, 2,2-diethoxyacetophenone, p-dimethylaminoacetophenone, 2-hydroxy-2-methyl-1-phenylpropan-1-one, benzyl dimethyl ketal, 1-(4-isopropylphenyl)-2-hydroxy-2-methylpropan-1-one, 4-(2-hydroxyethoxy)phenyl-(2-hydroxy-2-methylpropyl)ketone, 4-(2-hydroxy ethoxy)phenyl-(2-hydroxy-2-propyl)ketone, 1-hydroxycyclohexyl-phenylketone, 2-methyl-2-morpholino(4-thiomethylphenyl)propan-1-one, and 2-benzyl-2-dimethylamino-1-(4-morpholinophenyl)-butanone; benzoins such as benzoin, benzoin methyl ether, benzoin ethyl ether, benzoin-n-propyl ether, benzoin isopropyl ether, benzoin-n-butyl ether, benzoin isobutyl ether, benzoin dimethyl ketal, and benzoin peroxide; acylphosphine oxides such as 2,4,6-trimethoxybenzoindiphenylphosphine oxide; benzyl and methylphenyl-glyoxyester; benzophenones such as benzophenone, methyl-4-phenylbenzophenone, o-benzoylbenzoate, 2-chlorobenzophenone, 4,4'-dichlorobenzophenone, hydroxybenzophenone, 4-benzoyl-4'-methyl-diphenylsulfide, acryl-benzophenone, 3,3'4,4'-tetra(t-butylperoxycarbonyl)benzophenone, and 3,3'-dimethyl-4-methoxybenzophenone; thioxanthones such as 2-methylthioxanthone, 2-isopropylthioxanthone, 2,4-dimethylthioxanthone, 2,4-diethylthioxanthone, 2-chlorothioxanthone, and 2,4-dichlorothioxanthone; aminobenzophenones such as Michler's ketone and 4,4'-diethylaminobenzophenone; tetramethylthiuram monosulfide; azobisisobutyronitrile; di-tert-butyl peroxide; 10-butyl-2-chloroacridone; 2-ethylanthraquinone; 9,10-phenanthrenequinone; camphorquinone; titanocenes; and combinations thereof.

A photoinitiator aid such as ethyl 4-dimethylaminobenzoate or isoamyl 4-dimethylaminobenzoate may be used in combination with the photoinitiator.

The usage amount of the photoinitiator is not particularly limited, and may be, for example, 1 part by mass or more, 2 parts by mass or more, 3 parts by mass or more, 4 parts by mass or more, or 5 parts by mass or more, and may be 20 parts by mass or less, 15 parts by mass or less, 10 parts by mass or less, 8 parts by mass or less, or 6 parts by mass or less, relative to a total of 100 parts by mass of the ultraviolet-curable urethane acrylate resin and the ultraviolet-curable acrylic resin having no urethane bond.

(Solvent)

The infrared-absorbing ultraviolet-curable ink of the present invention may comprise a solvent for the purpose of dispersion and viscosity adjustment. The solvent is not particularly limited as long as the solvent disperses or dissolves the materials contained in the ink of the present invention.

Examples thereof include various organic solvents including alcohols such as ethanol, propanol, butanol, isopropyl alcohol, isobutyl alcohol, and diacetone alcohol, ethers such as methyl ether, ethyl ether, and propyl ether, esters such as ethyl acetate, ketones such as acetone, methyl ethyl ketone, diethyl ketone, cyclohexanone, ethyl isobutyl ketone, and methyl isobutyl ketone, aromatic hydrocarbons such as toluene, xylene, and benzene, aliphatic hydrocarbons such as normal hexane, heptane, and cyclohexane, and glycol ethers such as propylene glycol monomethyl ether acetate and propylene glycol monoethyl ether.

In the infrared-absorbing ultraviolet-curable ink of the present invention, when a solvent is used, the solvent may be a single solvent or a mixed solvent in which two or more solvents are mixed. When the solvent used for dispersing or diluting each component is used in ink, the solvent may be mixed as-is. A solvent for dilution may be added for the purpose of reducing the viscosity after preparation of the ink composition.

For examples, there is an aspect wherein a first solvent constituting a dispersion comprising the tungsten-based infrared-absorbing pigment, a second solvent constituting the ultraviolet-curable urethane acrylate resin solution, and a third solvent constituting a solution of the ultraviolet-curable acrylic resin having no urethane bond are mixed, and each solvent may be the same or different, and may be a single solvent or a mixed solvent of two or more types of solvent.

The content of the solvent of the infrared-absorbing ultraviolet-curable ink of the present invention is not particularly limited. For example, the content may be, relative to 100 parts by mass of the infrared-absorbing ultraviolet-curable ink, 0.1 parts by mass or more, 0.5 parts by mass or more, 1 part by mass or more, 3 parts by mass or more, or 5 parts by mass or more, and may be 50 parts by mass or less, 30 parts by mass or less, 20 parts by mass or less, 15 parts by mass or less, 10 parts by mass or less, 5 parts by mass or less, 3 parts by mass or less, or 1 part by mass or less.

(Dispersant)

In order to enhance the dispersibility of the tungsten-based infrared-absorbing pigment in the ink, the infrared-absorbing ultraviolet-curable ink of the present invention may comprise a dispersant. The dispersant is not particularly limited, and examples thereof include compounds having functional groups such as an amine, a hydroxyl group, a carboxyl group, and an epoxy group. These functional groups have the function to evenly disperse the tungsten-based infrared-absorbing pigment in the ink by adsorbing to the surface of the tungsten-based infrared-absorbing pigment and preventing aggregation of the tungsten-based infrared-absorbing pigment.

The content of the dispersant in the ink may be, relative to 100 parts by mass of the infrared-absorbing ultraviolet-curable ink, 0.1 parts by mass or more, 0.3 parts by mass or more, 0.5 parts by mass or more, 1.0 parts by mass or more, 1.5 parts by mass or more, or 2.0 parts by mass or more, and may be 15 parts by mass or less, 10 parts by mass or less, 8.0 parts by mass or less, 5.0 parts by mass or less, 3.0 parts by mass or less, 2.0 parts by mass or less, or 1.5 parts by mass or less.

<<Method for Production of Infrared-Absorbing Ultraviolet-Curable Ink>>

The method for the production of the infrared-absorbing ultraviolet-curable ink of the present invention is not particularly limited, and known methods used when forming an ink can be adopted.

Examples thereof include a method wherein a dispersion comprising the tungsten-based infrared-absorbing pigment and a first solvent, a composition comprising the ultraviolet-curable urethane acrylate resin or the resin and a second solvent, and an ultraviolet-curable acrylic resin having no urethane bond are mixed.

For the purpose of reducing the viscosity of the ink, the method may comprise mixing a dilution solvent to adjust the viscosity.

In this case, prior to obtaining the composition serving as the ink, the dilution solvent may be mixed with at least one of the pigment dispersion, the ultraviolet-curable urethane acrylate resin, and the ultraviolet-curable acrylic resin having no urethane bond, or alternatively, the dilution solvent may be mixed with the composition after preparation of the composition serving as the ink.

«Applications of Infrared-Absorbing Ultraviolet-Curable Ink»

The applications of the infrared-absorbing ultraviolet-curable ink of the present invention are not particularly limited. The infrared-absorbing ultraviolet-curable ink can be used as general printing ink, and for example, the infrared-absorbing ultraviolet-curable ink can be used as flexographic printing ink, letterpress printing ink, offset printing ink, intaglio printing ink, gravure printing ink, screen printing ink, and inkjet printing ink.

Among these, it is preferable that the infrared-absorbing ultraviolet-curable ink be used as an offset printing ink, intaglio printing ink, screen printing ink, or inkjet printing ink to prevent forgery of printed articles.

In particular, the infrared-absorbing ultraviolet-curable ink of the present invention can be used as an inkjet ink using an inkjet head compatible with high-viscosity liquids, which enables the formation of fine patterns even with high-viscosity ink.

«Infrared-Absorbing Printed Article»

Another aspect of the present invention provides an infrared-absorbing printed articles comprising a printed part which is printed with the infrared-absorbing ultraviolet-curable ink of the present invention.

By printing onto a substrate using the infrared-absorbing ultraviolet-curable ink of the present invention and curing with ultraviolet, a printed article comprising a printed part formed from the infrared-absorbing ultraviolet-curable ink of the present invention can be provided.

The substrate is not particular limited, and examples thereof include paper substrates such as wood-free paper, coated paper, art paper, cast-coated paper, foil paper, recycled paper, impregnated paper, and variable information paper; film substrates such as polyester films, polypropylene films, polystyrene films, vinyl chloride films, polyimide films, and variable information films; and fabric substrates such as woven fabrics, knitted fabrics, and non-woven fabrics.

The infrared-absorbing printed article of the present invention may be, for example, a banknote, security, or card.

The printed article obtained from the infrared-absorbing ultraviolet-curable ink of the present invention has infrared absorption properties, and thus can be used for the management of various information by reading the article with a near-infrared detector. For example, when a printed article obtained from the infrared-absorbing ultraviolet-curable ink of the present invention is observed with an infrared light detector such as an infrared camera, the printed part formed from the infrared-absorbing ultraviolet-curable ink of the present invention absorbs infrared and appears blacker than other parts, thereby providing contrast. Thus, the authenticity of the printed article can be determined by comparing the predetermined infrared absorption contrast with the infrared absorption contrast of the observed object.

EXAMPLES

The present invention will be described in greater detail below by way of the Examples and Comparative Examples, but the present invention is not limited thereto.

<Materials>

The materials used in the Examples and Comparative Examples are shown below.

(1) Tungsten-based infrared-absorbing pigment

·Cesium tungsten oxide (CWO) dispersion (YMS-01A-2, Sumitomo Metal Mining Co., Ltd.): CWO content 25% by mass
Hexagonal crystal $Cs_{0.33}WO_3$: 25% by mass
Propylene glycol monomethyl ether acetate: 58.9% by mass
Dipropylene glycol monomethyl ether: 1.86% by mass
Butyl acetate: 1.74% by mass
Dispersant: 12.5% by mass

(2) Ultraviolet-curable urethane acrylate resin

·LUXYDIR® WLS-373, DIC Corporation: 6 acryloyl groups per molecule, resin content: 100%
·LUXYDIR® V-4260, DIC Corporation: 3 acryloyl groups per molecule, resin content: 99% or more
·LUXYDIR® V-4263, DIC Corporation: 3 acryloyl groups per molecule, resin content: 99% or more

(3) Ultraviolet-curable acrylic resin having no urethane bond

·Acrylic monomer (BESTCURE dispersion UV monomer, T&K TOKA Co., Ltd.): 100% photosensitive monomer

(4) Solvent-soluble acrylic resin

·Acrylic resin (Acrydic® A-814, DIC Corporation)
Acrylic resin (Tg: 85 °C): 50% by mass
Toluene: 42.5% by mass
Ethyl acetate: 7.5% by mass

(5) Photoinitiator

• Photo radical initiator (IRGACURE® 500, BASF Corporation)

<Example 1>

10.0 g of a cesium tungsten oxide (CWO) dispersion (YMS-01A-2, Sumitomo Metal Mining Co., Ltd.) as the tungsten-based infrared-absorbing pigment, 5.0 g of LUXYDIR® WLS-373 (DIC Corporation) as the ultraviolet-curable urethane acrylate resin, 30.0 g of an acrylic monomer (BESTCURE dispersion UV monomer, T&K TOKA Co., Ltd.) as the ultraviolet-curable acrylic resin having no urethane bond, and IRGACURE® 500 (BASF Corporation) as a photoinitiator were mixed to produce an infrared-absorbing ultraviolet-curable ink.
The photoinitiator was added so as to be 4 parts by mass relative to a total of 100 parts by mass of the ultraviolet-curable urethane acrylate resin and the ultraviolet-curable acrylic resin having no urethane bond.

<Examples 2 to 10 and Comparative Examples 1 to 3>

The inks of Examples 2 to 10 and Comparative Examples 1 to 3 were prepared by changing the compounding ratio of the components as shown in Table 1 or Table 2. In the same manner as Example 1, the photoinitiator was added so that the blending amount thereof was 4 parts by mass relative to a total of 100 parts by mass of the ultraviolet-curable urethane acrylate resin and the ultraviolet-curable acrylic resin having no urethane bond.

The solvent-soluble acrylic resin (Acrydic® A-814, DIC Corporation) used in Comparative Example 2 had a high viscosity and was thus diluted with the same amount of ethyl acetate, and then mixed with the cesium tungsten oxide (CWO) dispersion (YMS-01A-2, Sumitomo Metal Mining Co., Ltd.).

In Comparative Example 1, the cesium tungsten oxide (CWO) dispersion (YMS-01A-2, Sumitomo Metal Mining Co., Ltd.) and the UV-curable acrylic monomer did not mix, whereby separation occurred and the cesium tungsten oxide precipitated. Thus, the use thereof as an ink could not be achieved.

In Comparative Example 3, since the ratio of the ultraviolet-curable urethane acrylate resin was high, the obtained composition had an excessively high viscosity and could not be used as an ink.

<Evaluation>

(Production of Printed Article)

As the substrate, a polyethylene terephthalate film (CD942, KOLON INDUSTRIES, INC.) and paper (OCR paper, Oji Paper Co., Ltd.) were prepared. The inks prepared in Examples 1 to 10 and Comparative Example 2 were each applied to a substrate using a wire bar at a coating amount of 7.5 g/m$^2$, heat-dried at 80°C., and then cured by ultraviolet irradiation to obtain a printed article. Thereafter, the printed article was cut into a size of 2.5 cm $\times$ 4 cm.

(Measurement of Infrared Reflectance)

The infrared reflectance of the obtained printed articles was measured in accordance with JIS K 0115 using a UV-vis reflection spectrum measuring instrument (UV-visible near-infrared spectrophotometer UH4150, Hitachi High-Tech Science Corporation). Each evaluation sample was measured three times (N number = 3). Note that the lower the numerical value of the infrared reflectance, the higher the infrared absorption. Table 1 or Table 2 shows infrared reflectance at a wavelength of 1000 nm.

(Washing Resistance Evaluation)

Next, washing resistance evaluation was carried out for the produced printed articles. Specifically, the printed articles were immersed in an aqueous solution at a temperature of 90 °C for 30 minutes. The aqueous solution was prepared by adding 0.5% by mass of laundry detergent (Attack™, Kao Corporation) and 1% by mass of sodium carbonate to distilled water. After immersion, the articles were washed with water and dried.

(Measurement of Infrared Reflectance)

The infrared reflectance of the printed articles after washing resistance evaluation was measured in the same manner as described above. Table 1 or Table 2 shows the infrared reflectance at a wavelength of 1000 nm.

(Residual Ratio of Tungsten-Based Infrared-Absorbing Pigment after Washing)

Using the infrared reflectance at a wavelength of 1000 nm before washing evaluation and the infrared reflectance at a wavelength of 1000 nm after washing evaluation, the residual ratio of the tungsten-based infrared-absorbing pigment after washing was determined by the following formula. The results are shown in Table 1 or Table 2. The obtained pigment residual ratio is an index for judging to what degree the infrared absorbing function can be maintained.

$$\text{Pigment residual ratio (\%)} = (100 - \text{infrared reflectance after evaluation}) / (100 - \text{infrared reflectance before evaluation}) \times 100$$

(Infrared Camera Observation)

The printed articles after washing resistance evaluation were observed with an infrared camera. For the observation, an infrared LED with a wavelength of 940 nm was used for infrared illumination, and a filter for eliminating light having a wavelength of 820 nm or less was used. Observation was made under observation conditions of 250,000 pixels, a lens view angle of 67° horizontally and 47° vertically, and a drawing range of 22 × 18 mm, and judgment was carried out in accordance with the following evaluation criteria. The results are shown in Table 1 or Table 2.

Excellent: A coated part can be more clearly distinguished.
Good: The coated part can be clearly distinguished.
Acceptable: The coated part can be identified by confirming the non-coated part and the coated part simultaneously.
Poor: The coated part cannot be determined even if the non-coated portion and the coated portion are confirmed simultaneously.

(Viscosity Measurement)

The viscosity of the obtained inks was measured in accordance with JIS Z 8803 at the temperatures shown in Table 1 or Table 2 using a tuning fork vibration-type viscosity meter (SV-1A (natural frequency: 30 Hz), A&D Company, Limited). Note that quantity of the measurement samples was 5 mL. The results are shown in Table 1 or Table 2.

[Table 1]

| | Component | Product name | | | Ex 1 | Ex 2 | Ex 3 | Ex 4 |
|---|---|---|---|---|---|---|---|---|
| Ink Composition | Tungsten-based infrared-absorbing pigment (CWO dispersion) | YMS-01 A-2 | Addition amount | (g) | 10.0 | 10.0 | 10.0 | 10.0 |
| | | | Pigment Solids | (g) | 2.5 | 2.5 | 2.5 | 2.5 |
| | | | Total solids | (g) | 3.75 | 3.75 | 3.75 | 3.75 |
| | Ultraviolet-curable urethane acrylate resin | WLS-373 | Addition amount | (g) | 5.0 | | | 2.0 |
| | | | Solids | (g) | 5.0 | | | 2.0 |
| | | V-4260 | Addition amount | (g) | | 5.0 | | |
| | | | Solids | (g) | | 5.0 | | |
| | | V-4263 | Addition amount | (g) | | | 5.0 | |
| | | | Solids | (g) | | | 5.0 | |
| | Ultraviolet-curable acrylic resin | BESTCURE dispersion UV monomer | Addition amount | (g) | 30.0 | 30.0 | 30.0 | 33.0 |
| | | | Solids | (g) | 30.0 | 30.0 | 30.0 | 33.0 |
| | Solvent-soluble acrylic resin | A-814 | Addition amount | (g) | | | | |
| | | | Solids | (g) | | | | |
| | Ethyl acetate | | Addition amount | (g) | | | | |
| | Polymerization initiator | IRGACURE 500 | Addition amount | (g) | 1.4 | 1.4 | 1.4 | 1.4 |
| | Ink composition total mass | | | (g) | 46.4 | 46.4 | 46.4 | 46.4 |
| | Ink composition total solid content | | | (g) | 40.2 | 40.2 | 40.2 | 40.2 |

Table 1 (continued)

| | | | | | Ex 1 | Ex 2 | Ex 3 | Ex 4 |
|---|---|---|---|---|---|---|---|---|
| Ultraviolet-curable urethane acrylate resin relative to 100 parts by mass of ultraviolet-curable acrylic resin | | | | (parts by mass) | 16.7 | 16.7 | 16.7 | 6.1 |
| Tungsten-based infrared-absorbing pigment relative to 100 parts by mass of total solids of the ink | | | | (parts by mass) | 6.2 | 6.2 | 6.2 | 6.2 |
| Ultraviolet-curable urethane acrylate resin relative to 100 parts by mass of total solids of the ink | | | | (parts by mass) | 12.5 | 12.5 | 12.5 | 5.0 |
| Washing resistance evaluation results | Reflectance at 1000 nm (N = 3) | PET | Prior to evaluation | | 21.3 | 26.1 | 24.1 | 32.1 |
| | | | After evaluation | | 42.3 | 93.9 | 97.6 | 97.9 |
| | | | Residual pigment ratio | (%) | 73.4 | 8.3 | 3.2 | 3.1 |
| | | OCR | Prior to evaluation | | 11.9 | 11.2 | 12.5 | 11.9 |
| | | | After evaluation | | 31.0 | 44.9 | 46.8 | 33.6 |
| | | | Residual pigment ratio | (%) | 78.3 | 62.0 | 60.8 | 75.4 |
| | Infrared camera observation | PET | | | Excellent | Excellent | Excellent | Excellent |
| | | OCR | | | Excellent | Excellent | Excellent | Excellent |
| Viscosity | | | | (mPa·s) | 15.2 | - | - | 11.4 |
| | | | | Solution temp (°C) | 25.3 | - | - | 25.6 |

Table 1 (continued)

| | Component | Product name | | | Ex 5 | Ex 6 | Ex 7 |
|---|---|---|---|---|---|---|---|
| Ink Composition | Tungsten-based infrared-absorbing pigment (CWO dispersion) | YMS-01 A-2 | Addition amount | (g) | 10.0 | 10.0 | 10.0 |
| | | | Pigment Solids | (g) | 2.5 | 2.5 | 2.5 |
| | | | Total solids | (g) | 3.75 | 3.75 | 3.75 |
| | Ultraviolet-curable urethane acrylate resin | WLS-373 | Addition amount | (g) | 3.5 | 17.5 | 35.7 |
| | | | Solids | (g) | 3.5 | 17.5 | 35.7 |
| | | V-4260 | Addition amount | (g) | | | |
| | | | Solids | (g) | | | |
| | | V-4263 | Addition amount | (g) | | | |
| | | | Solids | (g) | | | |
| | Ultraviolet-curable acrylic resin | BESTCURE dispersion UV monomer | Addition amount | (g) | 31.5 | 17.5 | 214.3 |
| | | | Solids | (g) | 31.5 | 17.5 | 214.3 |
| | Solvent-soluble acrylic resin | A-814 | Addition amount | (g) | | | |
| | | | Solids | (g) | | | |
| | Ethyl acetate | | Addition amount | (g) | | | |
| | Polymerization initiator | IRGACURE 500 | Addition amount | (g) | 1.4 | 1.4 | 10.0 |
| Ink composition total mass | | | | (g) | 46.4 | 46.4 | 270.0 |
| Ink composition total solid content | | | | (g) | 40.2 | 40.2 | 263.8 |

Table 1 (continued)

| | | | | | Ex 5 | Ex 6 | Ex 7 |
|---|---|---|---|---|---|---|---|
| Ultraviolet-curable urethane acrylate resin relative to 100 parts by mass of ultraviolet-curable acrylic resin | | | | (parts by mass) | 11.1 | 100.0 | 16.7 |
| Tungsten-based infrared-absorbing pigment relative to 100 parts by mass of total solids of the ink | | | | (parts by mass) | 6.2 | 6.2 | 0.9 |
| Ultraviolet-curable urethane acrylate resin relative to 100 parts by mass of total solids of the ink | | | | (parts by mass) | 8.7 | 43.6 | 13.5 |
| Washing resistance evaluation results | Reflectance at 1000 nm (N = 3) | PET | Prior to evaluation | | 15.2 | 16.0 | 49.5 |
| | | | After evaluation | | 66.0 | 15.9 | 54.4 |
| | | | Residual pigment ratio | (%) | 40.1 | 99.6 | 90.3 |
| | | OCR | Prior to evaluation | | 13.5 | 11.4 | - |
| | | | After evaluation | | 35.2 | 32.9 | - |
| | | | Residual pigment ratio | (%) | 74.9 | 75.7 | - |
| | Infrared camera observation | PET | | | Excellent | Excellent | Excellent |
| | | OCR | | | Excellent | Excellent | - |
| Viscosity | | | | (mPa·s) | 12.2 | 56.5 | - |
| | | | | Solution temp (°C) | 25.6 | 26.6 | - |

[Table 2]

| | Component | Product name | | | Ex 8 | Ex 9 | Ex 10 |
|---|---|---|---|---|---|---|---|
| Ink Composition | Tungsten-based infrared-absorbing pigment (CWO dispersion) | YMS-01 A-2 | Addition amount | (g) | 10.0 | 10.0 | 10.0 |
| | | | Pigment Solids | (g) | 2.5 | 2.5 | 2.5 |
| | | | Total solids | (g) | 3.75 | 3.75 | 3.75 |
| | Ultraviolet-curable urethane acrylate resin | WLS-373 | Addition amount | (g) | 2.4 | 1.71 | 1.0 |
| | | | Solids | (g) | 2.4 | 1.71 | 1.0 |
| | | V-4260 | Addition amount | (g) | | | |
| | | | Solids | (g) | | | |
| | | V-4263 | Addition amount | (g) | | | |
| | | | Solids | (g) | | | |
| | Ultraviolet-curable acrylic resin | BESTCURE dispersion UV monomer | Addition amount | (g) | 14.6 | 10.3 | 34.0 |
| | | | Solids | (g) | 14.6 | 10.3 | 34.0 |
| | Solvent-soluble acrylic resin | A-814 | Addition amount | (g) | | | |
| | | | Solids | (g) | | | |
| | Ethyl acetate | | Addition amount | (g) | | | |
| | Polymerization initiator | IRGACURE 500 | Addition amount | (g) | 0.68 | 0.48 | 1.4 |
| Ink composition total mass | | | | (g) | 27.7 | 22.5 | 46.4 |
| Ink composition total solid content | | | | (g) | 21.4 | 16.2 | 40.2 |

## Table 2 (continued)

| | | | | | Ex 8 | Ex 9 | Ex 10 |
|---|---|---|---|---|---|---|---|
| Ultraviolet-curable urethane acrylate resin relative to 100 parts by mass of ultraviolet-curable acrylic resin | | | | (parts by mass) | 16.7 | 16.6 | 2.9 |
| Tungsten-based infrared-absorbing pigment relative to 100 parts by mass of total solids of the ink | | | | (parts by mass) | 11.7 | 15.4 | 6.2 |
| Ultraviolet-curable urethane acrylate resin relative to 100 parts by mass of total solids of the ink | | | | (parts by mass) | 11.3 | 10.5 | 2.5 |
| Washing resistance evaluation results | Reflectance at 1000 nm (N = 3) | PET | Prior to evaluation | | 5.7 | - | - |
| | | | After evaluation | | 2.53 | - | - |
| | | | Residual pigment ratio | (%) | 79.2 | - | - |
| | | OCR | Prior to evaluation | | 10.9 | 9.9 | 10.5 |
| | | | After evaluation | | 29.0 | 28.5 | 28.6 |
| | | | Residual pigment ratio | (%) | 79.7 | 79.4 | 79.8 |
| | Infrared camera observation | PET | | | Excellent | - | - |
| | | OCR | | | Excellent | Excellent | Excellent |
| Viscosity | | | (mPa·s) | | - | - | 10.1 |
| | | | Solution temp (°C) | | - | - | 26.9 |

Table 2 (continued)

| | Component | Product name | | | Comp Ex 1 | Comp Ex 2 | Comp Ex 3 |
|---|---|---|---|---|---|---|---|
| Ink Composition | Tungsten-based infrared-absorbing pigment (CWO dispersion) | YMS-01 A-2 | Addition amount | (g) | 10.0 | 10.0 | 10.0 |
| | | | Pigment Solids | (g) | 2.5 | 2.5 | 2.5 |
| | | | Total solids | (g) | 3.75 | 3.75 | 3.75 |
| | Ultraviolet-curable urethane acrylate resin | WLS-373 | Addition amount | (g) | | | 35.0 |
| | | | Solids | (g) | | | 35.0 |
| | | V-4260 | Addition amount | (g) | | | |
| | | | Solids | (g) | | | |
| | | V-4263 | Addition amount | (g) | | | |
| | | | Solids | (g) | | | |
| | Ultraviolet-curable acrylic resin | BESTCURE dispersion UV monomer | Addition amount | (g) | 35.0 | 30.0 | |
| | | | Solids | (g) | 35.0 | 30.0 | |
| | Solvent-soluble acrylic resin | A-814 | Addition amount | (g) | | 10.0 | |
| | | | Solids | (g) | | 5.0 | |
| | Ethyl acetate | | Addition amount | (g) | | 10.0 | |
| | Polymerization initiator | IRGACURE 500 | Addition amount | (g) | 1.4 | 1.2 | 1.4 |
| | Ink composition total mass | | | (g) | 46.4 | 61.2 | 46.4 |
| | Ink composition total solid content | | | (g) | 40.2 | 40.0 | 40.2 |

Table 2 (continued)

| | | | | | Comp Ex 1 | Comp Ex 2 | Comp Ex 3 |
|---|---|---|---|---|---|---|---|
| Ultraviolet-curable urethane acrylate resin relative to 100 parts by mass of ultraviolet-curable acrylic resin | | | | (parts by mass) | 0.0 | 0.0 | - |
| Tungsten-based infrared-absorbing pigment relative to 100 parts by mass of total solids of the ink | | | | (parts by mass) | 6.2 | 6.3 | 6.2 |
| Ultraviolet-curable urethane acrylate resin relative to 100 parts by mass of total solids of the ink | | | | (parts by mass) | 0.0 | 0.0 | 87.2 |
| Washing resistance evaluation results | Reflectance at 1000 nm (N = 3) | PET | Prior to evaluation | | Not printable due to sedimentation of CWO | 45.4 | Not printable due to high viscosity |
| | | | After evaluation | | | 99.4 | |
| | | | Residual pigment ratio | (%) | | 1.1 | |
| | | OCR | Prior to evaluation | | | 12.6 | |
| | | | After evaluation | | | 72.3 | |
| | | | Residual pigment ratio | (%) | | 31.7 | |
| | Infrared camera observation | PET | | | | Good | |
| | | OCR | | | | Good | |
| Viscosity | | | | (mPa·s) | - | - | 435 |
| | | | | Solution temp (°C) | - | - | 25.2 |

As a result of the residual ratios of the tungsten-based infrared absorbing pigment of Examples 1 to 10, both the polyethylene terephthalate film coating and the OCR coating exhibited high values as compared to Comparative Example 2, and Examples 1 to 10 had a remarkably high washing resistance effect. This is believed to be due to the fact that a hydrogen bond is formed by the urethane bond of the ultraviolet-curable urethane acrylate resin, and a strong resin film is formed by the ultraviolet-curable urethane acrylate resin around the tungsten-based infrared-absorbing pigment.

It was determined from Example 1 and Examples 2 and 3 that the greater the number of acryloyl groups of the ultraviolet-curable urethane acrylate resin, the higher the residual ratio of the tungsten-based infrared-absorbing pigment in both polyethylene terephthalate film coating and OCR coating. This is believed to be because the ultraviolet-curable urethane acrylate resin, which has a large number of acryloyl groups, has a higher crosslinking density when a printed article is formed, resulting in improved washing resistance.

The inks of Examples having a viscosity of 60 mPa·s or less could be used for inkjet inks without problems.

**Claims**

1. An infrared-absorbing ultraviolet-curable ink, comprising a tungsten-based infrared-absorbing pigment, an ultraviolet-curable urethane acrylate resin, and an ultraviolet-curable acrylic resin having no urethane bond.

2. The infrared-absorbing ultraviolet-curable ink according to claim 1, comprising 1 to 150 parts by mass of the ultraviolet-curable urethane acrylate resin relative to 100 parts by mass of the ultraviolet-curable acrylic resin.

3. The infrared-absorbing ultraviolet-curable ink according to claim 1 or 2, comprising 20 parts by mass or less of the tungsten-based infrared-absorbing pigment relative to 100 parts by mass of total solids of the infrared-absorbing ultraviolet-curable ink.

4. The infrared-absorbing ultraviolet-curable ink according to any one of claims 1 to 3, comprising 1 to 50 parts by mass of the ultraviolet-curable urethane acrylate resin relative to 100 parts by mass of total solids of the infrared-absorbing ultraviolet-curable ink.

5. The infrared-absorbing ultraviolet-curable ink according to any one of claims 1 to 4, wherein the ultraviolet-curable urethane acrylate resin has a plurality of acryloyl groups.

6. The infrared-absorbing ultraviolet-curable ink according to any one of claims 1 to 5, wherein the tungsten-based infrared-absorbing pigment is at least one selected from:

a composite tungsten oxide represented by:

general formula (1): $M_xW_yO_z$

where M is one or more elements selected from the group consisting of H, He, alkali metal elements, alkaline earth metal elements, rare earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi, and I, W is tungsten, O is oxygen, and x, y, and x are each a positive number, $0 < x/y \leq 1$, and $2.2 \leq z/y \leq 3.0$, or
a tungsten oxide having a Magneli phase represented by:

general formula (2): $W_yO_z$

where W is tungsten, O is oxygen, y and z are each a positive number, and $2.45 \leq z/y \leq 2.999$).

7. The infrared-absorbing ultraviolet-curable ink according to any one of claims 1 to 6, which is an inkjet ink.

8. An infrared-absorbing printed article, comprising a printed part which is printed with the infrared-absorbing ultraviolet-curable ink according to any one of claims 1 to 7.

# EP 4 174 142 A1

**INTERNATIONAL SEARCH REPORT**

| International application No. |
| --- |
| PCT/JP2021/023788 |

**A. CLASSIFICATION OF SUBJECT MATTER**
C09D 11/101(2014.01)i; C09D 11/322(2014.01)i; B41M 5/00(2006.01)i
FI: C09D11/101; C09D11/322; B41M5/00 120
According to International Patent Classification (IPC) or to both national classification and IPC

**B. FIELDS SEARCHED**

Minimum documentation searched (classification system followed by classification symbols)
C09D11/101; C09D11/322; B41M5/00

| Documentation searched other than minimum documentation to the extent that such documents are included in the fields searched | |
| --- | --- |
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)
CAplus/REGISTRY (STN)

**C. DOCUMENTS CONSIDERED TO BE RELEVANT**

| Category* | Citation of document, with indication, where appropriate, of the relevant passages | Relevant to claim No. |
| --- | --- | --- |
| X | WO 2020/066388 A1 (FUJIFILM CORPORATION) 02 April 2020 (2020-04-02) claims, paragraphs [0026], [0052], [0124]-[0162], examples 18-20, etc. | 1–8 |
| A | WO 2015/068282 A1 (KYODO PRINTING CO., LTD.) 14 May 2015 (2015-05-14) claims, paragraphs [0123]-[0129], [0286], examples, etc. | 1–8 |
| A | WO 2017/053401 A1 (3M INNOVATIVE PROPERTIES COMPANY) 30 March 2017 (2017-03-30) claims, examples, etc. | 1–8 |
| A | JP 2015-21052 A (NATIONAL PRINTING BUREAU) 02 February 2015 (2015-02-02) claims, examples, etc. | 1–8 |
| A | JP 2020-50690 A (KYODO PRINTING CO., LTD.) 02 April 2020 (2020-04-02) claims, examples, etc. | 1–8 |

☒ Further documents are listed in the continuation of Box C.　　☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 18 August 2021 (18.08.2021) | 31 August 2021 (31.08.2021) |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

| International application No. |
| --- |
| PCT/JP2021/023788 |

C (Continuation).   DOCUMENTS CONSIDERED TO BE RELEVANT

| Category* | Citation of document, with indication, where appropriate, of the relevant passages | Relevant to claim No. |
| --- | --- | --- |
| P, A | WO 2021/049381 A1 (KYODO PRINTING CO., LTD.) 18 March 2021 (2021-03-18) claims, example 6 | 1-8 |

Form PCT/ISA/210 (continuation of second sheet) (January 2015)

**INTERNATIONAL SEARCH REPORT**

Information on patent family members

International application No.

PCT/JP2021/023788

| Patent Documents referred in the Report | Publication Date | Patent Family | Publication Date |
|---|---|---|---|
| WO 2020/066388 A1 | 02 Apr. 2020 | (Family: none) | |
| WO 2015/068282 A1 | 14 May 2015 | (Family: none) | |
| WO 2017/053401 A1 | 30 Mar. 2017 | US 2018/0251647 A1 claims, examples, etc. | |
| JP 2015/21052 A | 02 Feb. 2015 | (Family: none) | |
| JP 2020-50690 A | 02 Apr. 2020 | (Family: none) | |
| WO 2021/049381 A1 | 18 Mar. 2021 | (Family: none) | |

Form PCT/ISA/210 (patent family annex) (January 2015)

**EP 4 174 142 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016121801 A
- WO 2017104855 A
- JP 2020050690 A
- JP 2005187323 A